# EUROPÄISCHE PATENTANMELDUNG

(11) **EP 2 848 833 A2**
(43) Veröffentlichungstag der Anmeldung: **18.03.2015**
(21) Anmeldenummer: 14177380.4
(22) Anmeldetag: 17.07.2014
(51) Int. Cl.: F16C 35/073, F16C 35/077, F16C 27/02, F16C 27/04, F16C 1/10

(54) **Lagerring und Lager mit dem Lagerring sowie ein Verfahren zur Montage und Demontage eines Lagerrings**

(30) Priorität: 01.08.2013 DE 102013215175; 14.11.2013 DE 102013223197
(71) Anmelder: Aktiebolaget SKF, 41 550 Göteborg (SE)
(72) Erfinder: Arvand, Arash, 97422 Schweinfurt (DE); Krause, Thomas, 97506 Grafenrheinfeld (DE)
(74) Vertreter: Kuhstrebe, Jochen

(57) **Zusammenfassung**

Ausführungsbeispiele beziehen sich auf einen Lagerring (1). Dieser umfasst eine radial innen liegenden Umfangsfläche zur Montage auf einer Welle oder einer radial außen liegende Umfangsfläche (3) zu Montage in einem Gehäuse. Ferner umfasst der Lagerring eine faserverstärkte Schicht (5), die an der Umfangsfläche befestigt ist. Die faserverstärkte Schicht umfasst zumindest eine vorimprägnierte Faser.

## Beschreibung

Ausführungsbeispiele beziehen sich auf einen Lagerring, sowie ein Lager mit dem Lagerring sowie ein Verfahren zur Montage des Lagerrings und ein Verfahren zur Demontage des Lagerrings nach den unabhängigen Ansprüchen.

Wälz- und Gleitlager sollen neben ihrer eigentlichen Aufgabe, nämlich eine möglichst reibungsarme Drehbewegung zwischen zwei Bauteilen zu ermöglichen, ggf noch weitere Aufgaben erfüllen. Beispielsweise sollen die Lager auch ungedämpfte Vibrationen und Stöße von ggf. direkt benachbarten Bauteilen (Welle, Gehäuse) aufnehmen können. Diese Belastungen, könnten beispielsweise eine Lagerlebensdauer reduzieren. Ferner kann bei manchen Anwendungen ggf. das Problem auftreten, dass ein Presssitz zwischen einem Lagerring (z.B. Lagerinnenring) und einer Welle und/oder zwischen einem Lagerring (z.B. Lageraußenring) und einem Gehäuse bei einer Temperaturänderung aufgrund unterschiedlicher Wärmeausdehnungen von dem Lager, der Welle oder dem Gehäuse verloren gehen kann. Unter Umständen kann als Folge beispielsweise Fretting und/oder eine Kontaktkorrosion zwischen dem Lagerring und der Welle und/oder dem Gehäuse entstehen. Ferner soll das Lager einen hohen elektrischen Widerstand aufweisen, um einen Spannungsdurchschlag zwischen Bauteilen, die über das Lager verbunden sind, zu vermeiden.

Bei konventionellen Lösungen wird beispielsweise, um einen elektrischen Widerstand des Lagers zu erhöhen, eine keramische Beschichtung (z. B. Aluminiumoxid, Insocoat) eingesetzt. Diese kann beispielsweise mittels Plasmaspritzen an dem Lager aufgebracht werden. Dadurch kann ggf. ein elektrischer Stromdurchgang (von englisch "electrical erosion"), verhindert oder zumindest reduziert werden. Ferner können bei anderen konventionellen Lösungen keramische Wälzkörper verwendet werden. Diese Wälzkörper können einen nahezu unendlich hohen elektrischen Widerstand aufweisen. Dadurch könnte ebenfalls ein elektrischer Stromdurchgang verhindert oder zumindest reduziert werden. Allerdings sind sowohl eine keramische Beschichtung sowie die Verwendung von keramischen Wälzkörpern relativ aufwendig betreffend eine Herstellung für einen Materialeinsatz.

Es besteht daher ein Bedarf daran, ein Lager so weiterzubilden, dass es an die o.g. Anforderungen angepasst ist.

Diesem Bedarf trägt ein Lagerring, sowie ein Lager mit dem Lagerring und ein Verfahren zur Montage bzw. zur Demontage des Lagerrings bzw. des Wälzlagers nach den Merkmalen der unabhängigen Ansprüche Rechnung.

Einige Ausführungsbeispiele betreffen einen Lagerring. Der Lagerring umfasst eine radial innen liegende Umfangsfläche zur Montage auf einer Welle oder eine radial außen liegende Umfangsfläche zur Montage in einem Gehäuse. Ferner umfasst der Lagerring eine faserverstärkte Schicht. Die faserverstärkte Schicht ist an der Umfangsfläche befestigt. Die faserverstärkte Schicht umfasst eine vorimprägnierte Faser.

Dadurch, dass zwischen einer Umfangsfläche des Lagerrings und der Welle oder dem Gehäuse bzw. einer Bohrung eine faserverstärkte Schicht angeordnet ist, könnte ggf. ein Lager bereitgestellt werden, das verbesserte Eigenschaften in Bezug auf die Aufnahme von Vibrationen oder Stößen, einen elektrischen Widerstand und einen Herstellungsaufwand bzw. Materialeinsatz aufweist. Beispielsweise könnte ein elektrischer Widerstand des Lagerrings und damit eines Lagers erhöht sein. Es könnte ggf. ein Lager- oder ein Lagerring bereitgestellt werden, der einen elektrischen Widerstand aufweist, der oder das einen elektrischen Widerstand eines Lagers entspricht oder sogar höher sein kann als eines Lagers, das eine keramische Beschichtung aufweist. Ggf. könnte der Lagerring mit der faserverstärkten Schicht auf einfachere Art und Weise, beispielsweise mit einem geringeren Materialeinsatz und damit ggf. mit niedrigeren Herstellungskosten, als ein Lager mit einer entsprechenden keramischen Beschichtung, hergestellt werden. Ferner könnten ggf. Vibrationen, die beispielsweise von außen über die Welle oder das Gehäuse auf das Lager einwirken, reduziert bzw. deren Übertragung reduziert werden. Ggf. könnte durch die faserverstärkte Schicht eine dämpfende Eigenschaft des Lagerrings oder des Lagers bewirkt o-der verbessert werden. Des Weiteren könnten beispielsweise unterschiedliche Wärmeausdehnungen zwischen dem Lagerring (z.B. Lagerinnenring) und der Welle sowie dem Lagerring (z.B. Lageraußenring) und dem Gehäuse ausgeglichen werden. Ferner könnte dadurch ggf. ein ungewolltes Lösen des Lagerinnen- bzw. Lageraußenrings von der Welle bzw. dem Gehäuse in manchen Anwendungen vermieden bzw. zumindest reduziert werden. Dadurch könnte ggf. auch ein Fretting bzw. eine Kontaktkorrosion zwischen dem Lagerring und der Welle und/oder dem Lagerring und dem Gehäuse reduziert oder sogar vermieden werden.

Die faserverstärkte Schicht kann auf jedwede Art und Weise an dem Lagerring befestigt sein. Beispielsweise kann die faserverstärkte Schicht mittels Verkleben an dem Lagerring befestigt sein. Ggf. kann die faserverstärkte Schicht mittel Erwärmen an dem Lagerring geklebt werden. Beispielsweise könnte bei dem Erwärmen das Material mit dem die Faser vorimprägniert ist schmelzen und das Verkleben bewirken. Ferner könnte das Befestigen ggf. mittels Verkleben (z.B. mittels eines Klebstoffs), Aufpressen, oder Verpressen erfolgen. Ergänzend oder alternativ könnte die faserverstärkte Schicht zum Befestigen ausgehärtet werden. Beispielsweise kann die faserverstärkte Schicht mittels Erwärmen, Bestrahlen durch UV-Licht, Luft, Sauerstoff (z.B. Luftsauerstoff) ausgehärtet werden.

Bei einigen weiteren Ausführungsbeispielen umfasst die faserverstärkte Schicht ein fertiges Produkt, z.B. in Form einer gewickelten und bereits ausgehärteten Buchse. Ggf. kann die faserverstärkte Schicht eine Buchse oder ein fertiges Produkt sein.

Eine vorimprägnierte Faser kann dabei beispielsweise jedwedes Bauteil sein, das mit einer weiteren Schicht umgeben und/oder stabilisiert oder beschichtet ist. Eine Faser kann beispielsweise jedwedes Bauteil sein, das ausgebildet ist, um die beschriebene Festigkeit zu bewirken. Beispielsweise kann die Faser dazu in ihrer Länge eine wesentlich größere Ausdehnung als in ihrer Breite aufweisen. Beispielsweise kann die Faser eine Länge aufweisen, die mindesten 10-mal größer, 15-mal größer oder 20-mal größer als ihr Durchmesser ist. Beispielsweise kann eine Faser im Verhältnis zu ihrer Länge ein dünnes und flexibles Gebilde sein. Beispielsweise können Fasern in Längsrichtung keinen Druck, sondern nur Zugkräfte aufnehmen. Beispielsweise kann die Faser eine Glasfaser, eine Kohlefaser, eine Metallfaser, eine Keramikfaser, eine Kunststofffaser, eine Naturfaser etc. sein. Die Faser kann jedwedes Querschnittsprofil aufweisen, beispielsweise kreisförmig, rechteckig, rund, profilförmig, C-Profil, T- Profil, H-Profil, U-Profil oder ein Hohlprofil sein. Beispielsweise kann die Faser im Gegensatz zu den bei manchen konventionellen Lösungen verwendeten Verstärkungsfasern (z.B. Kurzfasern, Schnipsel), die beispielsweise eine Länge von 0 mm bis 1 mm aufweisen, eine sogenannte Endlosfaser sein. Beispielsweise kann die Faser eine Länge aufweisen, die größer ist als 1 mm. Beispielsweise kann die Faser länger als 1,1 mm, 1,2 mm, 1,3 mm, 1,4 mm, 2 mm, 3 mm, 5 mm, 10, mm, 20 mm etc. sein.

Bei einigen weiteren Ausführungsbeispielen umfasst die faserverstärkte Schicht ein Halbzeug. Ein Halbzeug kann dabei ein vorgefertigter Werkstoff sein. Beispielsweise handelt es sich bei dem Halbzeug um ein sogenanntes Faser-Matrix-Halbzeug, das flexibel ist und mittels Erwärmen oder durch Luft (z.B. Luftsauerstoff) oder durch UV-Strahlung ausgehärtet werden kann. Durch Verwendung des Halbzeugs könnte ggf. bewirkt werden, dass der Lagerring auf einfache Weise herstellbar ist, bzw. die faserverstärkte Schicht auf einfache Art und Weise angeordnet oder positioniert werden kann.

Beispielsweise kann der Lagerring einen metallischen Werkstoff, beispielsweise Eisen, Aluminium, Stahl, Messing und/oder Legierungen hiervon aufweisen.

Bei einigen weiteren Ausführungsbeispielen weist die zumindest eine Faser eine systematische Ausrichtung auf. Dadurch könnte beispielsweise bewirkt werden, dass die Faser so angeordnet ist, dass sie angreifende Lasten gut aufnehmen kann. Beispielsweise kann die zumindest eine Faser parallel zu einer Rotationsachse des Lagerrings angeordnet sein. Beispielsweise kann die Faser um einen Winkel von 0° bis 45°, zu einer Rotationsachse des Lagerrings angeordnet sein. Ergänzend oder alternativ kann die zumindest eine Faser parallel zu einer Umfangsrichtung des Lagerrings angeordnet sein. Ergänzend oder alternativ kann die zumindest eine Faser orthogonal zu einer Umfangsrichtung des Lagerrings- und/oder orthogonal zu einer Richtung der axialen Ausdehnung des Lagerings angeordnet sein. Beispielsweise kann mit orthogonal ein Winkelbereich gemeint sein, der 10° bis 90° umfasst, beispielsweise 30° bis 70°, beispielsweise 45°. Beispielsweise können die zumindest eine Faser in Richtung einer aufzunehmenden Kraft, beispielsweise einer Zugkraft angeordnet sein.

Bei einigen weiteren Ausführungen kann die zumindest eine Faser oder eine Mehrzahl von Fasern beispielsweise als eine textile Gewebefaserschicht angeordnet sein. Beispielsweise können eine Mehrzahl von parallel zueinander angeordneter Fasern um einen Winkel verdreht zu einer anderen Mehrzahl von parallel zueinander angeordneter Fasern angeordnet sein. Mit anderen Worten ausgedrückt, kann eine erste Faserschicht um einen Winkel verdreht zu einer zweiten Faserschicht angeordnet sein. Der Winkel kann beispielsweise in einem Wertebereich mit einem Anfangswert und einem Endwert liegen. Beispielsweise kann ein Anfangswert oder ein Endwert 0°, 5°, 10°, 15°, 20°, 25°, 30°, 40°, 45° 50°, 60°, 70°, 80° 85° oder 90° sein. Dadurch könnte beispielsweise bewirkt werden, dass der Werkstoff sehr stabil und unter Umständen besonders leicht ausgebildet sein kann.

Bei einigen weiteren Ausführungsbeispielen ist die zumindest eine Faser in eine Matrix eingelagert. Dadurch könnte beispielsweise ermöglicht werden, dass die Faser eine höhere Stabilität erhält. Als Matrixmaterial kann beispielsweises jedwedes Material eingesetzt werden, das ausgebildet ist, um als Matrix zu dienen. Beispielsweise kann das Material Kunststoff oder ein Harz sein. Mit anderen Worten ausgedrückt, kann die Faser mit einem Matrixmaterial bzw. einem Kunststoff oder einem Harz imprägniert bzw. vorimprägniert sein. Beispielsweise kann die Faser in die Matrix eingelagert sein, bevor die Schicht an der Umfangsfläche befestigt wird.

Bei einigen Ausführungsbeispielen ist die Faser mit einem Duroplast vorimprägniert. Mit anderen Worten ausgedrückt, könnte die die faserverstärkte Schicht ggf. eine Matrix aufweisen, die einen Duroplast bzw. einen duroplastischen Kunststoff umfasst. Beispielsweise kann die Matrix jedweden duroplastischen Kunststoff, beispielsweise Epoxidharz, Phenolharz, Polyesterharz, Melaminharz, etc. umfassen. Beispielsweise kann die faserverstärkte Schicht ein Prepreg aus einem textilen Gewebe in Kombination mit einem duroplastischen Kunststoff sein. Ein Prepreg kann beispielsweise eine vorimprägnierte Faser (von englisch: "pre impregnatet fibers") oder ein Faserbündel aus einer Mehrzahl von unidirektional angeordneten Fasern, die mit einem duroplastischen Kunststoff vorimprägniert sind, sein. Ein Prepreg kann beispielsweise ein Halbzeug sein, das zumindest eine Endlosfaser oder eine Mehrzahl von Endlosfasern und eine ungehärtete duroplastische Kunststoffmatrix umfasst. Die Endlosfasern können beispielsweise als unidirektionale Schicht, als Gewebe oder Gelege angeordnet sein. Dadurch könnte beispielsweise bewirkt werden, dass die faserverstärkte Schicht als Prepreg nach einem Aushärten, wie eine keramische Beschichtung an einer radial außen liegenden Umfangsfläche des Lagerrings (z. B. Außenring zum Gehäuse) und/oder einer radial innen liegenden Umfangsfläche des Lagerrings (z. B. Innenring zu der Welle) bei einem Gleit- oder Wälzlager wirken kann, beispielsweise zumindest in Bezug auf einen elektrischen Leitwert. Dadurch könnte beispielsweise eine elektrische Isolation bewirkt werden, die ggf. einfacher verwirklichbar ist als eine keramische Beschichtung. Dadurch könnte beispielsweise ein Aufwand in der Herstellung und bzgl. eines Materialeinsatzes reduziert werden. Beispielsweise könnte mittels der duroplastischen Matrix, da diese nicht reversibel aufschmelzbar ist, ein unlösbarer Verbund zwischen dem Duroplast und dem Gehäuse oder dem Duroplast und der Welle bzw. dem Lagerring hergestellt werden.

Bei einigen weiteren Ausführungsbeispielen kann die faserverstärkte Schicht in dem Gehäuse oder direkt auf der Welle angeordnet werden. Nach dem Anordnen des Lagerrings an der Schicht kann diese ggf. erwärmt und an dem Lagerring befestig bzw. verklebt werden. Mit anderen Worten ausgedrückt, könnte die beschriebene Funktion ggf. auch in einem Gehäuse erreicht werden, wenn das Gehäuse mit der faserverstärkten Schicht (z.B. Prepreg) versehen wird. Dazu kann die faserverstärkte Schicht in dem Gehäuse ggf. ebenfalls ausgehärtet werden.

Bei einigen Ausführungsbeispielen ist die Faser mit einem Thermoplast vorimprägniert. Mit anderen Worten ausgedrückt, kann die faserverstärkte Schicht ggf. eine Matrix, die einen Thermoplast bzw. einen thermoplastischen Kunststoff umfasst, aufweisen. Dadurch könnte beispielsweise ermöglicht werden, dass die Matrix bzw. die faserverstärkte Schicht reversibel aufschmelzbar ist. Damit könnte beispielsweise eine Demontage des Lagerrings bzw. eines Lagers, beispielsweise für eine Überholung oder einen Austausch nach dem Aushärten des Duroplast, der sich beispielsweise zwischen dem Ring und dem Gehäuse oder zwischen dem Ring und einer Welle befindet, möglich sein. Beispielsweise könnte ein thermoplastischer Matrixwerkstoff im Vergleich zu einem duroplastischen Matrixwerkstoff ein deutlich elastischeres Verhalten aufweisen und dadurch eine noch bessere vibrationsdämpfende Eigenschaft aufweisen. Dadurch könnte beispielsweise eine Rissbildung bzw. eine Rissausbildung in einem thermoplastischen Matrixsystem reduziert bzw. vermieden werden. Ggf. könnten so temperaturbedingte Gehäuseausdehnungen, von einem thermoplastischen Harz, aufgrund dessen guter Dehnfähigkeit, relativ gut ausgeglichen werden. Dadurch könnten beispielsweise Ablöseerscheinungen zwischen der thermoplastischen Matrix oder dem Thermoplast und dem Gehäuse und/oder der Welle vermieden und/oder zumindest reduziert werden. Beispielsweise kann die faserverstärkte Schicht ein Halbzeug aus eine textilen Gewebefaserschicht sein, die mit eine Kunststoff, imprägniert bzw. vor imprägniert ist, sein z.B. ein Organblech. Beispielsweise können die Fasern in einer Gitterstruktur zueinander angeordnet sein.

Mit anderen Worten ausgedrückt, kann der Lagerring bzw. ein Wälz- oder Gleitlager an einem Bohrungsdurchmesser eines Innenrings und/oder an einem Außendurchmesser des Außenrings ggf. vor der Auslieferung mit einem streifenförmigen Organoblech, beispielsweise in Lagerbreite versehen werden. Solche Organobleche können beispielsweise ein textiles technisches Gewebe (z. B. Glasfaser-, Kohlefaser-, Metallfaser-, Keramikfasergewebe) umfassen. Dieses Gewebe kann beispielsweise mit einem thermoplastischen Kunststoff imprägniert werden. Das Organoblech kann eine dämpfende Eigenschaft aufweisen. Dadurch könnte ggf. eine Betriebsfestigkeit und ggf. eine Lebensdauer eines Lagers, das den Lagerring aufweist, erhöht werden. Das Organoblech bzw. eine faserverstärkte Schicht mit einem thermoplastischen Werkstoff kann ggf. reversibel aufschmelzbar sein. Ein reversibel aufschmelzbarer Werkstoff könnte ggf. mehrfach beispielsweise warm umgeformt werden. Dadurch könnte ggf. eine einfache Demontierbarkeit des Lagers bewirkt werden. Beispielsweise könnte die elektrische Isolation des Lagerrings oder des Lagers durch die nichtleitenden Eigenschaften des Organoblechs erhöht werden. Dadurch könnte beispielsweise ein Spannungsdurchschlag in dem Lager vermieden werden.

Bei einigen weiteren Ausführungsbeispielen ist die faserverstärkte Schicht an einer Stirnkante des Lagerrings befestigt. Dadurch könnte beispielsweise ermöglich werden, dass der Lagerring auch in axialer Richtung verbesserte Eigenschaften in Bezug auf Dämpfung, Vibration- und Stoßaufnahme, Vermeidung oder Reduzierung von Fretting und/oder Kontaktkorrosion, Ausgleich von unterschiedlichen Wärmeausdehnungen und in Bezug auf elektrische Isolation erhalten kann.

Bei einigen weiteren Ausführungsbeispielen ist die faserverstärkte Schicht als ein Bauteil an der Umfangsfläche oder der zumindest einen Stirnfläche befestigt. Dadurch könnte beispielsweise ermöglicht werden, dass nur ein Bauteil oder ein Stück an dem Lagerring befestigt, ausgerichtet oder angeordnet werden muss. Ein einstückiges Bauteil kann dabei jedwedes Werkstück sein, das nicht eine Mehrzahl von getrennten einzelnen Teilen umfasst, sodass nur ein Teil befestigt oder positioniert werden muss. Beispielsweise könnte die faserverstärkte Schicht als ein Bauteil bzw. einstückig hergestellt bzw. aus einer Matte oder Gewebefaserschicht ausgeschnitten und/oder ausgestanzt werden. Dadurch könnte beispielsweise ein leichteres Positionieren der faserverstärkten Schicht an dem Lagerring ermöglicht werden.

Beispielsweise kann die faserverstärkte Schicht an beiden Stirnkanten befestigt sein. Eine Stirnkante kann dabei eine Fläche des Rings sein, die in eine axiale Richtung zeigt. Beispielsweise kann diese Fläche um einen Winkel von 0° bis 45° gegenüber einer Achse des Rings geneigt sein. Mit anderen Worten ausgedrückt, könnte beispielsweise eine einfache und kostengünstige Herstellung der Beschichtung durch Verkleben und/oder Aushärten des Prepregs oder des Organoblechs bzw. der faserverstärkten Schicht ermöglicht werden. Die faserverstärkte Schicht kann beispielsweise sehr flexibel sein und ggf. auch um die Stirnfläche (z. B. Kanten) beispielsweise bei einem Außenring oder einer Stirnseite eines Außenrings herum in einem Stück angeklebt und ausgehärtet werden.

Bei einigen weiteren Ausführungsbeispielen könnte die faserverstärkt Schicht mehrteilig ausgebildet sein. Dadurch könnte beispielsweise bewirkt werden, dass die faserverstärkte Schicht nur abschnittweise an der Umfangsfläche und/oder der Stirnfläche angeordnet ist. Beispielsweise kann ein Teilstück als separates Bauteil der faserverstärkte Schicht auf die Umfangsfläche geklebt sein. Weitere Teile der faserverstärkten Schicht könnten separat an den Stirnflächen befestigt sein. Beispielsweise könnte es sich dabei um eine Mehrzahl von Bauteilen handeln, die nicht einstückig miteinander verbunden sind. Dadurch könnte beispielsweise ermöglicht werden, dass die einzelnen Bauteile oder Stücke der faserverstärkten Schicht eine einfachere Geometrie aufweisen und kleiner ausgebildet sind. Dadurch könnte beispielsweise ein Positionieren und/oder eine Montage der faserverstärkten Schicht vereinfacht werden.

Bei einigen weiteren Ausführungsbeispielen weist die faserverstärkte Schicht eine Dicke auf von 0,1 mm bis 30 mm. Beispielsweise kann die faserverstärkte Schicht als Halbzeug eine ggf. variable Dicke d aufweise, die ggf. zwischen 0,1 mm bis 1 mm liegt. Ggf. kann die faserverstärkte Schicht als fertiges Produkt zwischen 1 mm und 30 mm betragen.. Dadurch könnte beispielsweise bewirkt werden, dass sich das Verwenden der faserverstärkten Schicht nur möglichst gering auf eine Lagergeometrie auswirkt. Eine Dicke kann dabei die Ausdehnung der Schicht in eine radiale Richtung sein, wenn die Schicht an der Umfangsfläche befestigt ist. Ferner kann die Dicke der Schicht die Ausdehnung in eine axiale Richtung sein, wenn die Schicht an der Stirnfläche befestigt ist. Ggf. kann die Dicke der faserverstärkten Schicht kleiner sein als 0,5 mm.

Mit anderen Worten ausgedrückt, könnten beispielsweise durch die in der faserverstärkten Schicht (z.B. Organoblech) vorhandenen Verstärkungsfasern in Kombination mit einer möglichst geringen Dicke der faserverstärkten Schicht (z.B. kleiner 0,5 mm) unerwünschte Selbst- und Kriecheffekte der faserverstärkten Schicht durch übertragene Lagerlasten auf ein Minimum reduziert werden. Da Thermoplaste beispielsweise im Vergleich zu Stahl einen um einen Faktor 5 bis 10 höheren Ausdehnungskoeffizienten aufweisen, könnten beispielsweise Passungsverluste zwischen dem Lagerring und dem Gehäuse, bzw. dem Lagerring und der Welle bei einer Temperaturerhöhung in der Anwendung sehr gut ausgeglichen werden.

Einige Ausführungsbeispiele betreffen ein Lager. Das Lager kann einen Lagerring nach einem der vorhergehenden Ausführungsbeispiele als einen Innenring umfassen, wobei die Umfangsfläche radial innen liegt. In diesem Fall könnte die faserverstärkte Schicht zwischen dem Innenring und der Welle angeordnet sein. Ergänzend oder alternativ umfasst das Lager einen Lagerring nach einem der vorhergehenden Ausführungsbeispiele als einen Außenring. Dabei liegt die Umfangsfläche radial außen. Mit anderen Worten ausgedrückt ist die faserverstärkte Schicht zwischen dem Außenring und dem Gehäuse angeordnet. Das Lager kann beispielsweise ein Gleit oder ein Wälzlager sein.

Mit anderen Worten ausgedrückt, kann beispielsweise ein Lager mit einem integrierten faserverstärkten Werkstoff bzw. integrierten Organoblech bereitgestellt werden. Ferner können beispielsweise Wälz- oder Gleitlager aller Bauarten und einem integrierten Organoblech an dem Innenring zu der Welle und/oder an dem Außenring zu dem Gehäuse bereitgestellt werden. Durch die faserverstärkte Schicht (z. B. Organoblech) können beispielsweise von außen auf das Lager einwirkende Vibrationen reduziert, Fretting und Kontaktkorrosion zwischen dem Lager, dem Gehäuse und/oder der Welle sowie beispielsweise elektrischer Spannungsdurchschlag zumindest reduziert oder sogar vermieden werden.

Einige Ausführungsbeispiele betreffen ein Verfahren zum Herstellen eines Lagerrings nach einer der vorhergehenden Ausführungsbeispiele. Das Verfahren umfasst Anordnen einer faserverstärkten Schicht an einer radial innen liegenden oder einer radial außen liegenden Umfangsfläche und/oder einer Stirnfläche des Lagerrings. Ferner wird die faserverstärkte Schicht erwärmt, sodass sich die Schicht mit der Umfangsfläche verklebt.

Einige weitere Ausführungsbeispiele betreffen ein Verfahren zur Montage eines Lagerrings oder eines Lagers. Bei dem Verfahren wird ein Lagerring auf einer Welle oder in einer Bohrung angeordnet. Ferner wird eine faserverstärkte Schicht zwischen einer Umfangsfläche des Lagerings die der Welle und/oder einer Umfangsfläche, die der Bohrung zugewandt ist, angeordnet. Ferner wird die faserverstärkte Schicht an der Welle und/oder an der Bohrung befestigt. Ggf. kann die faserverstärkte Schicht erwärmt werden, sodass sich die Schicht mit der Welle und/oder der Bohrung verklebt. Dadurch könnte beispielsweise auf einfache Art und Weise bewirkt werden, dass der Lagerring oder das Lager an der Welle oder in der Bohrung befestigt wird. Beispielsweise kann im Falle eines Halbzeugs das Befestigen durch eine Aushärtung des Halbzeugs erfolgen. Ggf. kann zum Aushärten des Halbzeugs Wärme, Luft, Sauerstoff und/oder UV-Strahlung eingesetzt werden. Dabei kann das Anordnen der faserverstärkten Schicht beispielsweise vor dem Anordnen des Lagerrings erfolgen. Beispielsweise kann die faserverstärkte Schicht bereits mit dem Lagerring verbunden bzw. verklebt sein, bevor der Lagerring oder das Lager in der Bohrung oder der Welle angeordnet wird. Alternativ kann die faserverstärkte Schicht bei manchen Ausführungsbeispielen auch in der Bohrung oder an der Welle angeordnet werden, bevor der Lagerring angeordnet wird. Ggf. kann die faserverstärkte Schicht auch an der Welle oder an der Bohrung vor dem Anordnen des Lagerrings befestigt bzw. verklebt werden, beispielsweise durch Verpressen oder Aushärten (Erwärmen, Reaktion an Luft, UV-Strahlung) der Schicht.

Mit anderen Worten ausgedrückt, könnte beispielsweise durch das Erwärmen der faserverstärkten Schicht (z. B. Organoblech) bewirkt werden, dass der darin enthaltene thermoplastische Kunststoff reversibel schmilzt. Dadurch könnte beispielsweise eine Klebefähigkeit des Kunststoffs im Schmelzzustand, beispielsweise auch unter Druck, ein Verbund zwischen den Gewebefasern und dem Lagerring (z. B. Lageraußen- bzw. Lagerinnenring) hergestellt werden. Ggf. nach dem Abkühlen, beispielsweise auf eine Raumtemperatur, könnte somit ein Verbund zwischen dem Lagerring und der faserverstärkten Schicht vorliegen. Ggf. könnte bei der Montage des mit der faserverstärkten Schicht ausgelieferten Lagerrings oder Lagers auf die Welle und/oder in das Gehäuse bzw. eine Bohrung die Welle und/oder das Gehäuse über den Schmelzpunkt des in der faserverstärkten Schicht vorhandenen thermoplastischen Kunststoffs erwärmt werden. Ggf könnte auch die Schicht selbst erwärmt werden. Das Lager kann dann eingepresst werden. Der thermoplastische Kunststoff der faserverstärkten Schicht bzw. des Organoblechs kann ggf. erneut aufschmelzen und durch seine Klebefähigkeit nun den Verbund zum Gehäuse, bzw. zu der Welle herstellen. Nach dem Abkühlen könnte ggf. ein fester Verbund zwischen dem Gehäuse, dem Lager und/oder der Welle entstehen.

Einige Ausführungsbeispiele betreffen ein Verfahren zur Demontage eines Lagerrings nach einem der vorhergehenden Ausführungsbeispiele oder eines Lagers nach einem der vorhergehenden Ausführungsbeispiele. Bei dem Verfahren wird die faserverstärkte Schicht erwärmt, sodass der Kunststoff der faserverstärkten Schicht schmilzt. Anschließend wird der Lagerring bzw. das Lager von der Welle und/oder dem Gehäuse entfernt. Dadurch könnte beispielsweise bewirkt werden, dass das Lager auf einfache Art und Weise bzw. der Lagerring demontiert werden kann. Mit anderen Worten ausgedrückt, könnte beispielsweise durch erneutes Erwärmen des Gehäuses oder der Welle oder der faserverstärkten Schicht, beispielsweise über die Schmelztemperatur des thermoplastischen Kunststoffs, das Lager oder der Lagerring wieder demontiert werden. Als thermoplastische Kunststoffe zur Herstellung der faserverstärkten Schicht bzw. des Organoblechs können beispielsweise solche Thermoplaste ausgewählt werden, welche einen Schmelzpunkt aufweisen, der deutlich über einem Anwendungsbereich bzw. einer Anwendungstemperatur (z. B. Betriebstemperatur) des Lagers liegt.

Mit anderen Worten ausgedrückt, könnte als faserverstärkte Schicht beispielsweise ein aus Kunststoff oder Naturfasern zusammengesetztes Gebilde (z. B. Gewebe, Gelege, etc.), welches in einem Harzsystem eingebettet sein kann, beispielsweise als Alternative zu einer keramischen Beschichtung (Insocoat-Beschichtung) mit einem erhöhten elektrischen Widerstand und ggf. vergleichbaren strukturmechanischen Eigenschaften verwendet werden. Dabei könnte beispielsweise ein Halbzeug (z. B. Gewebe), eingebettet in ein Harz, beispielsweise ein Prepreg, an einem Außenring (beispielsweise zu dem Gehäuse) eines Wälzlagers oder Gleitlagers angebracht und/oder ausgeordnet sein. Dieses könnte beispielsweise in einem Ofen bei einer Temperatur kleiner 200 Grad Celsius ausgehärtet werden. Beispielsweise durch die Wahl geeigneter Fasern, in Kombination mit einem geeigneten Harzsystem, könnte beispielsweise die elektrische Leitfähigkeit sowie auch die strukturmechanischen und tribologischen Eigenschaften einer solchen Beschichtung gezielt beeinflusst werden. Beispielsweise könnten ein solcher faserverstärkter Verbundwerkstoff und die anschließende Verarbeitung deutlich günstiger sein, als die Verwendung eines keramischen Wälzkörpers oder einer keramischen Beschichtung. Mit anderen Worten ausgedrückt, könnte beispielsweise eine faserverstärkte Verbundstruktur mit einem hohen elektrischen Widerstand bereitgestellt werden.

Bei einigen weiteren Ausführungsbeispielen können Merkmale, die in anderen Ausführungsbeispielen als Vorrichtungsmerkmal offenbart sind, auch als Verfahrensmerkmale implementiert sein. Ferner können ggf. auch Merkmale, die in manchen Ausführungsbeispielen als Verfahrensmerkmale implementiert sind, in anderen Ausführungsbeispielen als Vorrichtungsmerkmale implementiert sein.

Weitere vorteilhafte Ausgestaltungen werden nachfolgend anhand von in den Zeichnungen dargestellten Ausführungsbeispielen, auf welche die Ausführungsbeispiele jedoch nicht beschränkt sind, näher beschrieben.

So zeigen die Figuren schematisch die nachfolgenden Ansichten.
Fig. 1 zeigt eine schematische Querschnittsdarstellung eines Lagerrings als Außenring für ein Lager gemäß einem Ausführungsbeispiel;
Fig. 2 zeigt eine schematische Querschnittsdarstellung eines Lagerrings als Innenring für ein Lager gemäß einem Ausführungsbeispiel;
Fig. 3 zeigt eine schematische Querschnittsdarstellung eines Lagerrings als Außenring für ein Lager gemäß einem weiteren Ausführungsbeispiel;
Fig. 4 zeigt eine schematische Querschnittsdarstellung eines Lagerrings als Innenring für ein Lager gemäß einem Ausführungsbeispiel;
Fig. 5 zeigt eine schematische Darstellung eines Verfahrens zur Montage eines Lagerrings;
Fig. 6 zeigt eine schematische Darstellung eines Verfahrens zur Demontage eines Lagerrings.

Bei der nachfolgenden Beschreibung der beigefügten Darstellungen bezeichnen gleiche Bezugszeichen gleiche oder vergleichbare Komponenten. Ferner werden zusammenfassende Bezugszeichen für Komponenten und Objekte verwendet, die mehrfach in einem Ausführungsbeispiel oder in einer Darstellung auftreten, jedoch hinsichtlich eines oder mehrerer Merkmale gemeinsam beschrieben werden. Komponenten oder Objekte, die mit gleichen oder zusammenfassenden Bezugszeichen beschrieben werden, können hinsichtlich einzelner, mehrerer oder aller Merkmale, beispielsweise ihrer Dimensionierungen, gleich, jedoch ggf. auch unterschiedlich ausgeführt sein, sofern sich aus der Beschreibung nicht etwas anderes explizit oder implizit ergibt.

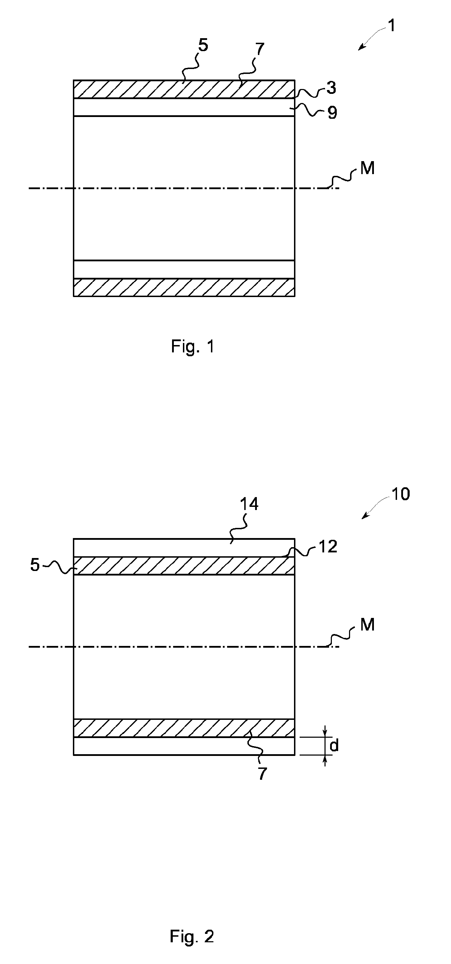

Fig. 1 zeigt eine schematische Querschnittsdarstellung eines Lagerrings als Außenring für ein Lager gemäß einem Ausführungsbeispiel.

Fig. 1 zeigt einen Lagerring 1 mit einer radial außen liegenden Umfangsfläche 3 bei der Montage in einem nicht dargestellten Gehäuse. Ferner umfasst der Lagerring eine faserverstärkte Schicht 5, die an die Umfangsfläche 3 angebracht ist. Die faserverstärkte Schicht 5 ist ein Halbzeug. Bei dem Ausführungsbeispiel der Fig. 1 ist der Lagerring 1 als ein Außenring für ein Lager, beispielsweise für ein Wälz- oder ein Gleitlager, ausgebildet. Der Lagerring 1 weist eine Rotationsachse M auf. Ggf. kann die faserverstärkte Schicht 5 mittels Erwärmen Verkleben, Aushärten oder Verpressen angebracht oder befestigt sein.

Die faserverstärkte Schicht 5 weist eine Mehrzahl von Fasern 7 auf. Diese, bzw. deren Schnittflächen sind schematisch als Punkte dargestellt. Die Fasern 7 sind in einer Matrix, beispielsweise einer duroplastischen Matrix oder einer thermoplastischen Matrix eingebettet. Beispielsweise können die Fasern systematisch angeordnet sein. Beispielsweise sind die Fasern 7 gewickelt, als Gewebe, Gelege, textiles Gewebe oder als eine unidirektionale Schicht angeordnet. Der Lagerring 1 weist einen Grundkörper 9, beispielsweise aus einem metallischen Werkstoff auf. Beispielsweise weist der metallische Grundkörper 9 einen geringeren Durchmesser auf als die faserverstärkte Schicht 5, die an der radial außen liegenden Umfangsfläche befestigt ist.

Fig. 2 zeigt eine schematische Querschnittsdarstellung eines Lagerrings als Innenring für ein Lager gemäß einem Ausführungsbeispiel.

Ein in Fig. 2 gezeigter Lagerring 10 weist eine radial innen liegende Umfangsfläche 12 zur Montage auf einer nicht dargestellten Welle auf. Ferner umfasst der Lagerring 10 eine faserverstärkte Schicht 5. Beispielsweise weist die faserverstärkte Schicht 5, wenn sie an der radial innen liegenden Umfangsfläche 12 befestigt ist, einen kleineren Durchmesser auf als ein beispielsweise metallischer Grundkörper 14 des Lagerrings 10.

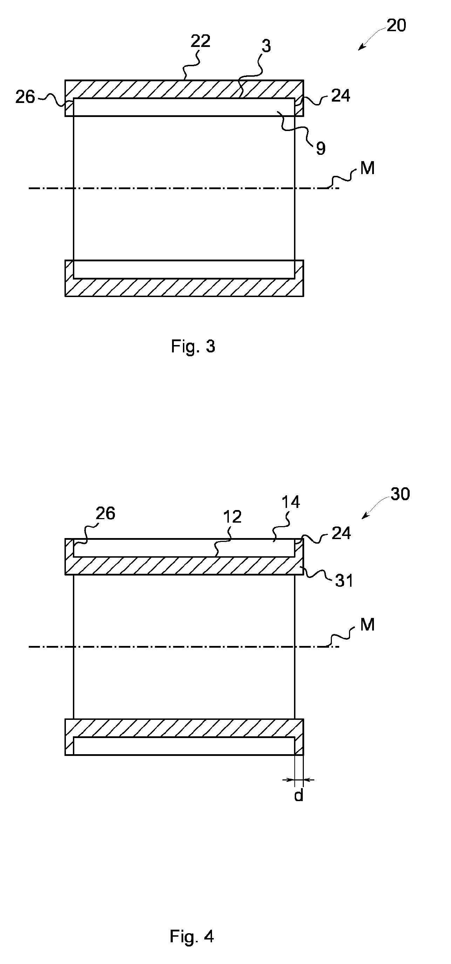

Fig. 3 zeigt eine schematische Querschnittsdarstellung eines Lagerrings als Außenring für ein Lager gemäß einem weiteren Ausführungsbeispiel.

Ein in Fig. 3 gezeigter Lagerring 20 ist als Außenring ausgebildet. Der Lagerring 20 ist im Wesentlichen analog zu dem Außenring 1 ausgebildet und weist ebenfalls den metallischen Grundkörper 9 auf. Eine faserverstärkte Schicht 22 ist an einer radial außen liegenden Umfangsfläche 3 des Lagerrings 20 angeordnet. Ferner bedeckt die faserverstärkte Schicht 22 auch eine Stirnkante 24 des Grundkörpers 9. Analog ist auch eine Stirnkante 26 des Grundkörpers 9 von der faserverstärkten Schicht 22 bedeckt. Die faserverstärkte Schicht 22 weist dazu in axialer Richtung eine größere Ausdehnung als der Grundkörper 9 auf. An jeweils einem Ende in axialer Richtung ist die faserverstärkte Schicht 22 umgebogen, sodass sie die Stirnkanten 24 und 26 des metallischen Grundkörpers 9 des Lagerrings 20 bedeckt. Die faserverstärkte Schicht 22 ist beispielsweise einstückig ausgebildet.

Alternativ kann die faserverstärkte Schicht 22 eine Mehrzahl von Teilstücken aufweisen. Dazu können beispielsweise Teilstücke der faserverstärkten Schicht 22, die die Stirnkanten 24 und 26 bedecken, getrennt von dem Teil der faserverstärkten Schicht 22 sein, das an der radial außen angeordneten Umfangsfläche 3 angeordnet ist.

Fig. 4 zeigt eine schematische Querschnittsdarstellung eines Lagerrings als Innenring für ein Lager gemäß einem Ausführungsbeispiel.

Ein in Fig. 4 gezeigter Lagerring 30 ist ein Innenring. Dieser weist eine faserverstärkte Schicht 31 auf. Die faserverstärkte Schicht 31 ist im Wesentlichen analog zur faserverstärkten Schicht 5 ausgebildet, angeordnet und an einer radial innen liegenden Umfangsfläche 12 befestigt. In eine axiale Richtung weist die faserverstärkte Schicht 31 eine größere Ausdehnung als der metallische Grundkörper 14 des Lagerrings 30 auf. Dabei stehen Enden der faserverstärkten Schicht 31 über den metallischen Grundkörper 14 des Lagerrings 30 hinaus. Diese können umgeklappt bzw. umgebogen werden, sodass diese jeweils eine Stirnkante 24 bzw. eine Stirnkante 26 des metallischen Grundkörpers 14 bedecken bzw. an diesem befestigt sind.

Die faserverstärkte Schicht 31 im Wesentlichen analog zu der faserverstärkten Schicht 22 ausgebildet, jedoch radial innen liegend an dem metallischen Grundkörper 14 angeordnet. Damit weist die faserverstärkte Schicht 31 einen kleineren Durchmesser als der metallische Grundkörper 14 auf.

Die faserverstärkten Schichten 5, 22 und 31 weisen jeweils eine Dicke d auf. Dabei kann die Dicke d eine Ausdehnung der Schicht 5, 22 oder 31 in eine radiale Richtung sein, wenn die Schicht an der Umfangsfläche 3 bzw. 12 befestigt ist. Ferner kann die Dicke d der Schicht eine Ausdehnung in eine axiale Richtung sein in Bereichen in denen die Schicht 31 bzw. 22 an den Stirnflächen 24 bzw. 26 befestigt ist.

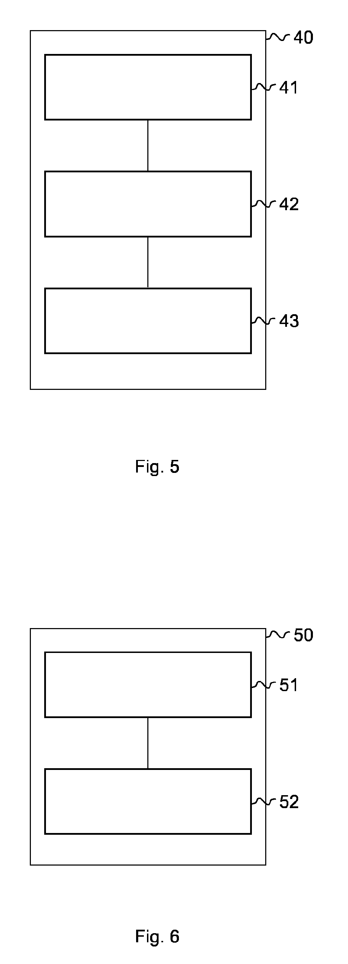

Fig. 5 zeigt eine schematische Darstellung eines Verfahrens zur Montage eines Lagerrings.

Ein in Fig. 5 gezeigtes Verfahren 40, zur Montage eines Lagerrings oder eines Lagers mit dem Lagerring umfasst Anordnen 41 des Lagerrings oder des Lagers auf einer Welle oder in einer Bohrung. Ferner wird eine faserverstärkte Schicht zwischen einer Umfangsfläche des Lagerrings oder des Lagers die zu der Welle zeigt und/oder einer Umfangsfläche, die zu der Bohrung zeigt angeordnet 42. Die faserverstärkte Schicht wird auch befestigt 43, sodass sie sich mit der Welle und/oder der Bohrung verbindet verklebt. Ggf. kann die faserverstärkte Schicht erwärmt werden, sodass sie sich mit der Welle und/oder der Bohrung verklebt.

Dabei kann das Anordnen der faserverstärkten Schicht beispielsweise vor dem Anordnen des Lagerrings erfolgen. Beispielsweise kann die faserverstärkte Schicht bereits mit dem Lagerring verbunden bzw. verklebt sein, bevor der Lagerring oder das Lager in der Bohrung oder der Welle angeordnet wird. Alternativ kann die faserverstärkte Schicht bei manchen Ausführungsbeispielen auch in der Bohrung oder an der Welle angeordnet werden, vor der Lagerring angeordnet wird. Ggf. kann die faserverstärkte Schicht auch an der Welle oder in der Bohrung vor dem Anordnen des Lagerrings befestigt beispielsweise verklebt werden. Ergänzend oder alternativ kann das Befestigen beispielsweise durch Verpressen oder Aushärtung der Schicht mittels Erwärmen, Lufthärtung, UV-Härtung erfolgen.

Fig. 6 zeigt eine schematische Darstellung eines Verfahrens zur Demontage eines Lagerrings.

Bei einem in Fig. 6 gezeigten Verfahren 50 zur Demontage eines Lagerrings nach einem der vorhergehenden Ausführungsbeispiele oder eines Lagers mit einem Lagerring nach einem der vorhergehenden Ausführungsbeispiele wird die faserverstärkte Schicht erwärmt 51, sodass ein Kunststoff der faserverstärkten Schicht schmilzt. Anschließend wird der Lagerring oder das Lager von der Welle und/oder aus dem Gehäuse bzw. der Bohrung des Lagers entfernt 52.

Lagerringe und Verfahren zur Montage, bzw. Demontage der Lagerringe können zu jedweder Arten von Lagern, beispielsweise Gleit- oder Wälzlagern in Fahrzeugen, Baumaschinen, Arbeitsmaschinen und dergleichen eingesetzt und/oder verwendet werden.

Die in der vorstehenden Beschreibung, den nachfolgenden Ansprüchen und den beigefügten Figuren offenbarten Ausführungsbeispiele sowie deren einzelne Merkmale können sowohl einzeln wie auch in beliebiger Kombination für die Verwirklichung eines Ausführungsbeispiels in ihren verschiedenen Ausgestaltungen von Bedeutung sein und implementiert werden.

### Bezugszeichenliste

- 1: Lagerrings
- 3: Umfangsfläche
- 5: faserverstärkte Schicht
- 7: Faser
- 9: Metallischer Grundkörper
- 10: Lagerring
- 12: Umfangsfläche
- 14: Metallischer Grundkörper
- 20: Lagerring
- 22: Faserverstärkte Schicht
- 24: Stirnkante
- 26: Stirnkante
- 30: Lagerring
- 31: Faserverstärkte Schicht
- 40: Verfahren
- 41: Anordnen
- 42: Anordnen
- 43: Befestigen
- 50: Verfahren
- 51: Erwärmen
- 52: Entfernen

- M: Rotationsachse
- d: Dicke

## Patentansprüche

1. Lagerring (1, 10) umfassend die folgenden Merkmale:
eine radial innen liegende Umfangsfläche (12) zur Montage auf einer Welle oder eine radial außen liegende Umfangsfläche (3) zu Montage in einem Gehäuse; und
eine faserverstärkte Schicht (5, 22, 31), die an der Umfangsfläche (3, 12) befestigt ist, wobei die faserverstärkte Schicht (5, 22, 31) zumindest eine vorimprägnierte Faser (7) umfasst.

2. Lagerring nach Anspruch 1, wobei die faserverstärkte Schicht ein Halbzeug ist.

3. Lagerring nach einem der vorhergehenden Ansprüche, wobei die faserverstärkte Schicht (5, 22, 31) zumindest eine Faser (7) mit einer systematischen Ausrichtung aufweist.

4. Lagerring nach einem der vorhergehenden Ansprüche, wobei die Faser mit einem Duroplast vorimprägniert ist oder wobei die Faser mit einem Thermoplast vorimprägniert ist.

5. Lagerring nach einem der vorhergehenden Ansprüche, wobei die faserverstärkte Schicht (5, 22, 31) an zumindest einer Stirnkante (24, 26) des Lagerrings (20, 30) befestigt ist.

6. Lagerring nach Anspruch 5, wobei die faserverstärkte Schicht (5, 22, 31) als ein Bauteil an der Umfangsfläche (3, 12) und der zumindest einen Stirnfläche (24, 26) befestigt ist.

7. Lagerring nach einem der vorhergehenden Ansprüche, wobei die faserverstärkte Schicht (5, 22, 31) eine Dicke (d) aufweist, die zwischen 0,1 mm bis 30 mm beträgt.

8. Lager, umfassend
einen Lagerring (10, 30) nach einem der Ansprüche 1 bis 7 als einen Innenring, wobei die Umfangsfläche (12) radial innen liegt und/oder
einen Lagerring (1, 20) nach einem der Ansprüche 1 bis 7 als einen Außenring, wobei die Umfangsfläche (3) radial außen liegt.

9. Verfahren (40) zur Montage eines Lagerringes (1, 10, 20, 30) oder eines Lagers, wobei das Verfahren (40) umfasst:
Anordnen (41) des Lagerringes (1, 10, 20, 30) oder des Lagers auf einer Welle oder in einer Bohrung;
Anordnen (42) einer faserverstärkten Schicht zwischen einer Umfangsfläche des Lagerings die der Welle und/oder der Bohrung zugewandt ist;
Befestigen (43) der faserverstärkten Schicht, an der Welle und/oder der Bohrung.

10. Verfahren (50) zur Demontage eines Lagerringes (1, 10, 20, 30) nach einem der Ansprüche 1 bis 7 oder eines Lagers nach Anspruch 8; wobei das Verfahren (50) umfasst:
Erwärmen (51) der faserverstärkten Schicht; sodass ein Kunststoff der faserverstärkten Schicht schmilzt;
Entfernen (52) des Lagerrings (1, 10, 20, 30) oder des Lagers von der Welle und/oder aus der Bohrung.
